# EUROPÄISCHE PATENTSCHRIFT

(11) **EP 2 422 035 B1**
(45) Veröffentlichungstag und Bekanntmachung des Hinweises auf die Patenterteilung: **10.07.2013**
(21) Anmeldenummer: 10749764.6
(22) Anmeldetag: 23.07.2010
(51) Int. Cl.: E06B 9/42, B60J 7/00

(54) **ROLLOANORDNUNG, INSBESONDERE FÜR EIN FAHRZEUG, UND DACHANORDNUNG**
ROLLER BLIND ARRANGEMENT, IN PARTICULAR FOR A VEHICLE, AND ROOF ARRANGEMENT
SYSTÈME DE STORE, NOTAMMENT POUR UN VÉHICULE, ET SYSTÈME DE TOIT

(30) Priorität: 31.07.2009 DE 102009035427
(43) Veröffentlichungstag der Anmeldung: 29.02.2012
(73) Patentinhaber: Webasto SE, 82131 Stockdorf (DE)
(72) Erfinder: Rockelmann, Andreas, 81249 München (DE); Thalhammer, Marco, 81827 München (DE); Walser, Martin, 82131 Unterbrunn (DE); Steiner, Erwin, 82362 Weilheim (DE)
(74) Vertreter: Epping - Hermann - Fischer
(86) Internationale Anmeldenummer: PCT/DE2010/000885
(87) Internationale Veröffentlichungsnummer: WO 2011/012116

(56) Entgegenhaltungen:
- WO-A1-2009/033439
- DE-U1-202005 006 415
- US-A- 2 383 015
- US-A- 2 894 578
- US-A1- 2002 046 816

## Beschreibung

Die Erfindung betrifft eine Rolloanordnung, insbesondere für ein Fahrzeug, mit einer Rollobahn, die wenigstens an einem Ende mittels einer Wickelvorrichtung zu einem Rollowickel aufwickelbar und in einer Abwickelrichtung abwickelbar ist.

Bei Rolloanordnungen nach dem Stand der Technik kann die Rollobahn ohne weitere zusätzliche Teile zu einem Rollowickel aufgewickelt werden, der in einem vorgegebenen Bereich in dem Fahrzeug angeordnet ist. Bei einem sehr raschen Aufwickeln der Rollobahn in Fahrzeuglängsrichtung kann der Rollowickel stark beschleunigt werden, so dass es zu einem Verklemmen oder fehlerhaften Aufwickeln kommen kann.

Die WO 2009/033439 offenbart eine Rollovorrichtung, insbesondere für ein Schiebedachsystem, aufweisend eine Rollobahn, welche mittels einer Wickelvorrichtung zumindest an einem Ende zu einem Rollowickel aufwickelbar ist. Die Wickelvorrichtung umfasst mit der Rollobahn verbundene, sich selbst aufwickelnde Spiralfedern.

Die US 2,383,015 offenbart eine Rolloanordnung mit einer Rollobahn, die wenigstens an einem Ende mittels einer Wickelvorrichtung mit einer Wickelachse zu einem Rollowickel aufwickelbar ist.

Die US 2002/0046816 A1 offenbart eine Kopfschiene für eine Abschattungsvorrichtung, die einen modularen Aufbau hat. Ein Abschnitt der Kopfschiene trägt eine Rollobahn und ein zweiter Abschnitt der Kopfschiene trägt ein gefaltetes Abschattelement. Die beiden Abschnitte sind voneinander getrennt.

Die DE 20 2005 006 415 U1 offenbart eine Baugruppe mit einem Rollo, zwei Spiralfedern, die sich entlang von Längsrändern des Rollos erstrecken, einer Führung zum Führen der Spiralfedern, und einer Aufwickelhilfe, die in Richtung der Verschiebung des Rollos zum Aufwickeln hinter der Führung angeordnet ist und beim Auf- und Abwickeln an den Spiralfedern angreift.

Die US 2,894,578 offenbart eine Rolloanordnung, mit einem Rollenkörper, einer auf dem Rollenkörper aufgewickelten Rollobahn und einem Zahnrad zum Drehen des Rollenkörpers.

Aufgabe der Erfindung ist es, eine Rolloanordnung der eingangs genannten Art und eine Dachanordnung anzugeben, die einen einfachen Aufbau bei niedrigen Kosten ermöglichen, aber dennoch eine zuverlässige Bedienung der Rolloanordnung erlauben.

Diese Aufgabe wird gemäß eines ersten Aspekts der Erfindung durch eine Rolloanordnung der eingangs genannten Art gelöst. Der Rollowickel ist in als Wickelwanne und Deckel ausgebildeten Gehäuseelementen aufgenommen, mittels denen die Position des Rollowickels nach oben und nach unten begrenzt ist. Die Wickelvorrichtung hat ein Führungselement, das bezüglich der geometrischen Mittelachse des Rollowickels in einer im Wesentlichen der Abwickelrichtung entgegengesetzten Richtung angeordnet ist. Das Führungselement ist dazu ausgebildet ist, eine Bewegung des Rollowickels in der der Abwickelrichtung entgegengesetzten Richtung zu begrenzen. Die geometrische Mittelachse des Rollowickels verläuft durch den Mittelpunkt der im Wesentlichen kreisförmigen

Querschnittsfläche des Rollowickels. Die Wickelvorrichtung weist zur Aufwicklung der Rollobahn zu einem Rollowickel eine Feder auf, die als Metallstreifen aus einem Federblech ausgebildet ist.

Die Rollobahn kann entlang der Innenseite des Führungselements gleiten, um ein Ausbauchen des Rollowickels und der Feder zu verhindern.

Während bei den Rolloanordnungen nach dem Stand der Technik ein sorgfältiges und nicht zu rasches Aufwickeln der Rollobahn in Fahrzeuglängsrichtung erforderlich ist, ermöglicht die vorliegende Rolloanordnung ein sehr rasches Aufwickeln der Rollobahn, ohne dass die Rollobahn im Bereich des Rollowickels ausbauchen und damit in der Rolloanordnung verklemmen kann. Insgesamt kann so ein Ausbauchen des gesamten Rollowickels wirksam verhindert werden. Ein weiterer Vorteil einer derartigen Rolloanordnung ist, dass die Wickelvorrichtung mechanisch sehr einfach ausgestaltet werden kann.

In einer vorteilhaften Ausführungsform ist das Führungselement blattförmig ausgebildet.

Dies hat den Vorteil, dass das Führungselement sehr leicht und dennoch mechanisch stabil ausgebildet sein kann. Darüber hinaus kann ein blattförmiges Führungselement sehr einfach und kostengünstig hergestellt werden.

In einer weiteren vorteilhaften Ausführungsform ist das Führungselement als Kreisbogen ausgebildet. Der Mittelpunkt des Kreisbogens ist die geometrische Mittelachse des Rollowickels in aufgewickeltem Zustand.

Damit kann vorteilhafterweise erreicht werden, dass das Führungselement in seiner Form sehr gut an die Außenseite des Rollowickels angepasst sein kann und damit ein sauberes Aufwickeln der Rollobahn unterstützen kann.

In einer weiteren vorteilhaften Ausführungsform schließt der Kreisbogen des Führungselements einen Winkel von 45° bezogen auf die geometrische Mittelachse des Rollowickels ein. Dies hat den Vorteil, dass der Rollowickel in einem nennenswerten Teil seiner Außenseite von dem Führungselement geführt werden kann.

In einer weiteren vorteilhaften Ausführungsform ist die Rolloanordnung manuell betätigbar. Dies ermöglicht einen sehr einfachen Aufbau der Rolloanordnung.

Die Rolloanordnung kann auch in einfacher Weise von einem manuellen Betrieb auf einen elektrischen Betrieb umgerüstet werden. Dazu wird die Rollobahn beispielsweise im Bereich des Zugspriegels mit einem Motor gekoppelt.

Gemäß eines zweiten Aspekts der Erfindung weist eine Dachanordnung eine Dachöffnung, einen Dachöffnungsrahmen, der die Dachöffnung begrenzt, und eine Rolloanordnung gemäß des ersten Aspekts der Erfindung auf. Die Rolloanordnung ist in der Dachöffnung angeordnet und mit dem Dachöffnungsrahmen mechanisch gekoppelt.

Weitere vorteilhafte Ausgestaltungen der Erfindung sind in den Unteransprüchen angegeben.

Die Erfindung wird nachfolgend anhand von Ausführungsbeispielen näher erläutert. Es zeigt:
- Figur 1: eine schematische Ansicht einer Dachanordnung eines Fahrzeugs, und
- Figur 2: eine schematische Ansicht einer Rolloanordnung.

Elemente gleicher Konstruktion oder Funktion sind figurenübergreifend mit den gleichen Bezugszeichen gekennzeichnet.

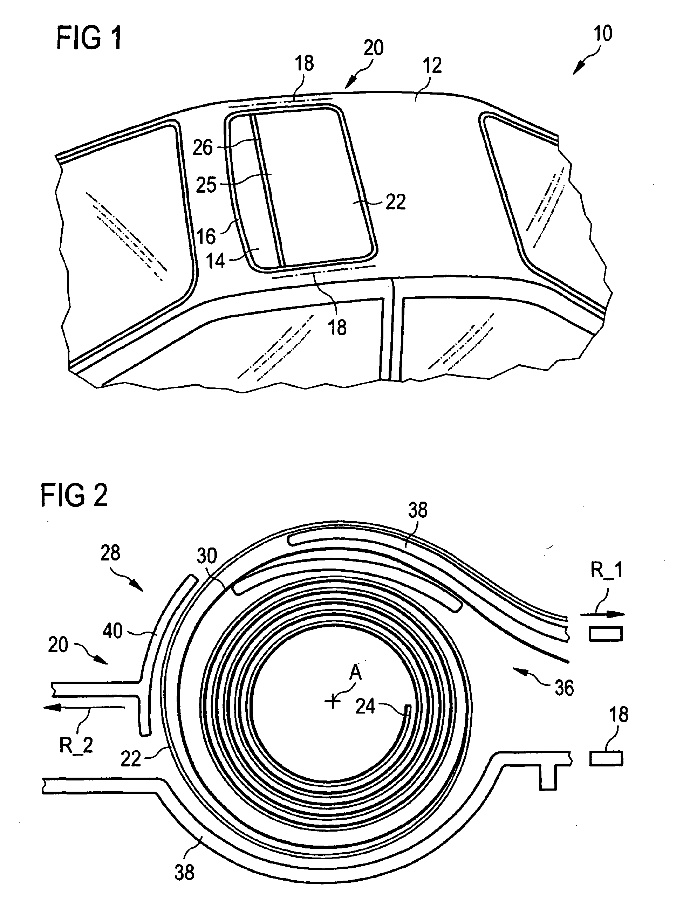

In Figur 1 ist ein Fahrzeug 10 dargestellt, mit einem Fahrzeugdach 12, das mit einer Dachöffnung 14 versehen ist, die mittels eines verschiebbaren Schiebedachdeckels wahlweise verschlossen oder zumindest teilweise freigebbar ist.

Die Dachöffnung 14 wird von einem am Fahrzeugdach 12 ausgebildeten Dachöffnungsrahmen 16 begrenzt. Der Dachöffnungsrahmen 16 hat vorzugsweise beidseitig angeordnete Führungsschienen 18, in denen unterhalb des verschiebbaren Schiebedachdeckels eine Rolloanordnung 20 angeordnet ist, die in Figur 2 detailliert dargestellt ist. Als Material für die Führungsschienen 18 kommen Metalle oder Kunststoffe in Betracht.

Die Rolloanordnung 20 weist eine Rollobahn 22 auf, die, bezogen auf das Fahrzeug 10, nach vorne in einer Abwickelrichtung R_1 und nach in einer der Abwickelrichtung R_1 entgegengesetzten Richtung R_2 nach hinten verschoben werden kann. Ist die Rollobahn 22 vollständig nach hinten geschoben, so ist die Dachöffnung 14 vollständig freigegeben. Sonnenlicht und Umgebungsluft können dann ungehindert in den Fahrzeuginnenraum gelangen. Ist die Rollobahn 22 dagegen vollständig nach vorne geschoben, so ist die Dachöffnung 14 durch die Rollobahn 22 abgedeckt, so dass direktes Sonnenlicht und Umgebungsluft nur teilweise in den Fahrzeuginnenraum gelangen können.

An einem Ende 24 der Rollobahn 22, das bezüglich der Fahrzeuglängsrichtung das hintere Ende der Rollobahn 22 ist, kann die Rollobahn 22 vollständig aufgewickelt sein, wie dies im Folgenden im Detail dargestellt ist. An einem weiteren Ende 25 der Rollobahn 22, das bezüglich der Fahrzeuglängsrichtung das vordere Ende der Rollobahn 22 ist, ist ein zugspriegel 26 angeordnet, den der Fahrzeuginsasse insbesondere manuell betätigen kann, um so die Rollobahn 22 nach vorne oder nach hinten zu schieben. In den seitlich der Dachöffnung 14 angeordneten Führungsschienen 18 sind die Längsränder der Rollobahn 22, also der rechte und der linke Rand der Rollobahn 22, angeordnet.

In einem Bereich des hinteren Endes der Dachöffnung 14 ist eine Wickelvorrichtung 28 angeordnet. Die Wickelvorrichtung 28 weist eine Feder 30 auf. Die Feder 30 ist vorzugsweise als dünner Metallstreifen aus einem Federblech ausgebildet. Die Feder 30 hat, wenn sie in den Führungsschienen 18 aufgenommen ist, die in Fig. 2 gezeigte, spiralförmige Querschnittsform. Die Feder 30 ist derart ausgebildet, dass sie bestrebt ist, sich zu einem Wickel aufzurollen, wenn keine äußeren Kräfte auf sie einwirken. Die Rollobahn 22 ist mit den Federn 30 vorzugsweise nur in dem Bereich an dem hinteren Ende 24 der Rollobahn 22 verbunden.

Wenn die Rollobahn 22 nach hinten verschoben wird, um die Dachöffnung 14 freizugeben, wird die Rollobahn 22 von den Federn 30 von allein zu einem Rollowickel 36 mit einer geometrischen Mittelachse A aufgewickelt. Die Rollobahn 22 ist aufgrund der Vorspannung der Federn 30 straff gespannt.

Der Rollowickel 36 ist vorzugsweise in als Wickelwanne und Deckel ausgebildeten Gehäuseelementen 38 aufgenommen, mittels denen die Position des Rollowickels 36 insbesondere nach oben und nach unten begrenzt wird. Die als Wickelwanne und Deckel ausgebildeten Gehäuseelemente 38 gehen vorzugsweise einteilig in die Führungsschienen 18 über.

Die Wickelvorrichtung 30 hat ein Führungselement 40. Das Führungselement 40 ist vorzugsweise fest mit den Gehäuseelementen 38 gekoppelt oder mit diesen einstückig ausgebildet. Das Führungselement 40 ist vorzugsweise aus einem Metall oder einen Kunststoff gebildet. Das Führungselement 40 ist bezüglich der geometrischen Mittelachse A des Rollowickels 36 in der der Abwickelrichtung R_1 der Rollobahn 22 entgegengesetzten Richtung R_2 angeordnet. Das Führungselement 40 kann eine Bewegung des Rollowickels 36 in der der Abwickelrichtung R_1 entgegen gesetzten Richtung R_2 begrenzen. Um eine möglichst geringe Masse des Führungselements 40 zu erreichen, ist dieses vorzugsweise blattförmig ausgebildet. Das Führungselement 40 ist vorzugsweise als Kreisbogen ausgebildet. Der Mittelpunkt des Kreisbogens ist vorzugsweise die geometrische Mittelachse A des Rollowickels 36. Vorzugsweise schließt der Kreisbogen des Führungselements 40 einen Winkel von 45° bezogen auf die geometrische Mittelachse A des Rollowickels 36 ein.

Durch die Ausbildung des Führungselements 40 wie dargestellt ist es möglich, dass bei einem raschen Aufwickeln der Rollobahn 22 entgegengesetzt der Abwickelrichtung R_1 bei einer Beschleunigung des Rollowickels 36 in der Richtung R_2 diese Bewegung begrenzt wird, ohne dass es zu einer Verlangsamung der Aufwickelbewegung kommt. Die Rollobahn 22 kann entlang der Innenseite des Führungselements 40 gleiten und so weiterhin in zuverlässiger Weise auf den Rollowickel 36 aufgewickelt werden. Damit kann auch ein Ausbauchen des Rollowickels 36 und der Feder 30 wirksam verhindert werden.

In einer bevorzugten Ausführungsform ist die Rolloanordnung 20 manuell betätigbar. Im weiteren Ausführungsformen kann die Rolloanordnung 20 auch mittels eines Motors betätigt werden. Durch das Vorsehen des Führungselements 40 kann in besonders einfacher und effektiver Weise verhindert werden, dass bei einem sehr raschen Aufwickeln der Rollobahn 22 zum Öffnen der Dachöffnung 14 die Rollobahn 22 aus den als Wickelwanne und Deckel ausgebildeten Gehäuseelementen 38 heraus beschleunigt wird, und es zu einem Verklemmen der Rollobahn 22 in den Gehäuseelementen 38 oder der Führungsschiene 18 kommen kann.

Bei allen beschriebenen Ausführungsformen der Erfindung kommt insbesondere die Anordnung der Rolloanordnung in einem öffnungsfähigen Fahrzeugdach in Frage. Andere Dachanordnungen, bei denen eine erfindungsgemäße Rolloanordnung angewendet werden könnte, sind Glasdächer in Gebäuden, insbesondere in Wintergärten oder Hausdächern. Die Rollobahnen müssen nicht notwendigerweise dem Sonnenschutz dienen, auch beispielsweise Mückenschutzgitter können vorteilhaft durch die beschriebene Anordnung betätigt werden.

Die Erfindung ist nicht auf die angegebenen Ausführungsbeispiele beschränkt.

Weiterhin ist es möglich, die Merkmale der verschiedenen Ausführungsbeispiele miteinander zu kombinieren, so dass such derartige Anordnungen von der Erfindung umfasst sind.

## Patentansprüche

1. Rolloanordnung (20), insbesondere für ein Fahrzeug, mit einer Rollobahn (22), die wenigstens an einem Ende (24) mittels einer Wickelvorrichtung (28) zu einem Rollowickel (36) mit einer geometrischen Mittelachse (A) aufwickelbar und in einer Abwickelrichtung (R_1) abwickelbar ist, wobei
- die Wickelvorrichtung (28) ein Führungselement (40) aufweist, das bezüglich der geometrischen Mittelachse (A) des Rollowickels (36) in einer im wesentlichen der Abwickelrichtung (R_1) entgegengesetzten Richtung (R_2) angeordnet und dazu ausgebildet ist, eine Bewegung des Rollowickels (36) in der der Abwickelrichtung (R_1) entgegengesetzten Richtung (R_2) zu begrenzen,
- die Wickelvorrichtung (28) zur Aufwicklung der Rollobahn (22) zu einem Rollowickel (36) eine Feder (30) aufweist, die als Metallstreifen aus einem Federblech ausgebildet ist, und
- die Rollobahn (22) entlang der Innenseite des Führungselements (40) gleiten kann, um ein Ausbauchen des Rollowickels (36) und der Feder (30) zu verhindern, **dadurch gekennzeichnet, dass** - der Rollowickel (36) in als Wickelwanne und Deckel ausgebildeten Gehäuseelementen (38) aufgenommen ist, mittels denen die Position des Rollowickels (36) nach oben und nach unten begrenzt ist.

2. Rolloanordnung (20) nach Anspruch 1, **dadurch gekennzeichnet, dass** das Führungselement (40) blattförmig ausgebildet ist.

3. Rolloanordnung (20) nach einem der Ansprüche 1 bis 2, **dadurch gekennzeichnet, dass** das Führungselement (40) als Kreisbogen ausgebildet ist, und der Mittelpunkt des Kreisbogens die geometrische Mittelachse (A) des Rollowickels (36) im aufgewickelten Zustand ist.

4. Rolloanordnung (20) nach Anspruch 3, **dadurch gekennzeichnet, dass** der Kreisbogen des Führungselements (40) einen Winkel von 45° bezogen auf die geometrische Mittelachse (A) des Rollowickels (36) einschließt.

5. Rolloanordnung (20) nach einem der vorhergehenden Ansprüche, **dadurch gekennzeichnet, dass** die Rolloanordnung (20) manuell betätigbar ist.

6. Dachanordnung mit
- einer Dachöffnung (14)
- einem Dachöffnungsrahmen (16), der die Dachöffnung (14) begrenzt, und
- einer Rolloanordnung (20) nach einem der vorhergehenden Ansprüche, wobei die Rolloanordnung (20) in der Dachöffnung (14) angeordnet und mit dem Dachöffnungsrahmen (16) mechanisch gekoppelt ist.

## Claims

1. Roller blind arrangement (20), in particular for a vehicle, with a roller blind web (22) which can be wound up at least at one end (24) by means of a winding device (28) to form a roller blind winding (36) having a geometrical center axis (A) and can be unwound in an unwinding direction (R_1), wherein
- the winding device (28) has a guide element (40) which is arranged with respect to the geometrical center axis (A) of the roller blind winding (36) in a direction (R_2) essentially opposite to the winding direction (R_1) and is designed to limit a movement of the roller blind winding (36) in the direction (R_2) opposite to the unwinding direction (R_1),
- the winding device (28) for winding up the roller blind web (22) to form a roller blind winding (36) has a spring (30) which is designed as a metal strip from a spring steel sheet, and
- the roller blind web (22) can slide along the inside of the guide element (40), in order to prevent bulging of the roller blind winding (36) and of the spring (30),
**characterized in that**
- the roller blind winding (36) is accommodated in housing elements (38) which are designed in the form of a winding trough and cover and by means of which the position of the roller blind winding (36) is limited upward and downward.

2. Roller blind arrangement (20) according to Claim 1, **characterized in that** the guide element (40) is of sheetlike design.

3. Roller blind arrangement (20) according to either of Claims 1 and 2, **characterized in that** the guide element (40) is designed as an arc of a circle, and the center point of the arc of the circle is the geometrical center axis (A) of the roller blind winding (36) in the wound-up state.

4. Roller blind arrangement (20) according to Claim 3, **characterized in that** the arc of the circle of the guide element (40) encloses an angle of 45° with respect to the geometrical center axis (A) of the roller blind winding (36).

5. Roller blind arrangement (20) according to one of the preceding claims, **characterized in that** the roller blind arrangement (20) can be actuated manually.

6. Roof arrangement, with
- a roof opening (14),
- a roof opening frame (16) which bounds the roof opening (14), and
- a roller blind arrangement (20) according to one of the preceding claims, wherein the roller blind arrangement (20) is arranged in the roof opening (14) and is mechanically coupled to the roof opening frame (16).

## Revendications

1. Système de store (20), en particulier pour un véhicule, avec une bande de store (22), qui peut être enroulée au moins à une extrémité (24) au moyen d'un dispositif d'enroulement (28) en une bobine de store (36) avec un axe central géométrique (A) et qui peut être déroulée dans une direction de déroulement (R_1), dans lequel
- le dispositif d'enroulement (28) présente un élément de guidage (40), qui est disposé par rapport à l'axe central géométrique (A) de la bobine de store (36) dans une direction (R_2) essentiellement opposée à la direction de déroulement (R_1) et qui est conçu pour limiter un mouvement de la bobine de store (36) dans la direction (R_2) opposée à la direction de déroulement (R_1),
- le dispositif d'enroulement (28) présente, pour l'enroulement de la bande de store (22) en une bobine de store (36), un ressort (30) qui est réalisé sous la forme d'une bande de métal en une tôle à ressort, et
- la bande de store (22) peut glisser le long du côté intérieur de l'élément de guidage (40), afin d'empêcher un gonflement de la bobine de store (36) et du ressort (30),
**caractérisé en ce que**
- la bobine de store (36) est logée dans des éléments de boîtier (38) réalisés en forme de goulotte d'enroulement et de couvercle, au moyen desquels la position de la bobine de store (36) est limitée vers le haut et vers le bas.

2. Système de store (20) selon la revendication 1, **caractérisé en ce que** l'élément de guidage (40) est réalisé en forme de feuille.

3. Système de store (20) selon l'une quelconque des revendications 1 à 2, **caractérisé en ce que** l'élément de guidage (40) est réalisé en forme d'arc de cercle, et le centre de l'arc de cercle est l'axe central géométrique (A) de la bobine de store (36) à l'état enroulé.

4. Système de store (20) selon la revendication 3, **caractérisé en ce que** l'arc de cercle de l'élément de guidage (40) couvre un angle de 45° par rapport à l'axe central géométrique (A) de la bobine de store (36).

5. Système de store (20) selon l'une quelconque des revendications précédentes, **caractérisé en ce que** le système de store (20) peut être actionné à la main.

6. Système de toit, avec
- une ouverture de toit (14),
- un cadre d'ouverture de toit (16), qui limite l'ouverture de toit (14), et
- un système de store (20) selon l'une quelconque des revendications précédentes, dans lequel le système de store (20) est disposé dans l'ouverture de toit (14) et est mécaniquement couplé au cadre d'ouverture de toit (16) .
